# EUROPÄISCHE PATENTSCHRIFT

(11) **EP 3 717 151 B1**
(45) Veröffentlichungstag und Bekanntmachung des Hinweises auf die Patenterteilung: **29.05.2024**
(21) Anmeldenummer: 18786762.7
(22) Anmeldetag: 15.10.2018
(51) Int. Cl.: B22F 3/105, B22F 3/115, B33Y 30/00, B05B 1/08, B05B 1/32, B05B 15/14, B41J 2/14, B22D 23/00, B22F 9/08

(54) **DRUCKKOPF FÜR EINEN 3D-DRUCKER**
3D PRINTING HEAD
TETE POUR IMPRESSION 3D

(30) Priorität: 27.11.2017 DE 102017221178
(43) Veröffentlichungstag der Anmeldung: 07.10.2020
(73) Patentinhaber: Robert Bosch GmbH, 70442 Stuttgart (DE)
(72) Erfinder: MAIER, Eberhard, 73257 Koengen (DE); SCHWEIZER, Benjamin, 72160 Horb (DE)
(86) Internationale Anmeldenummer: PCT/EP2018/078001
(87) Internationale Veröffentlichungsnummer: WO 2019/101437

(56) Entgegenhaltungen:
- WO-A1-2018/167209
- CN-B- 106 064 477
- CN-U- 204 869 667
- CN-U- 205 020 809
- DE-A1-102014 110 799
- US-A- 4 995 535
- US-A- 5 598 200
- US-A1- 2017 087 632

## Beschreibung

Die Erfindung betrifft einen Druckkopf für einen 3D-Metalldrucker.

### Stand der Technik

Ein 3D-Drucker für ein thermoplastisches Material erhält eine feste Phase dieses Materials als Ausgangsmaterial, erzeugt daraus eine flüssige Phase und bringt diese flüssige Phase selektiv an den Stellen, die zu dem zu erzeugenden Objekt gehören, auf. Ein solcher 3D-Drucker umfasst einen Druckkopf, in den das Ausgangsmaterial geschmolzen wird. Weiterhin sind Mittel zur Erzeugung einer Relativbewegung zwischen dem Druckkopf und der Arbeitsfläche, auf der das Objekt entstehen soll, vorgesehen. Dabei können entweder nur der Druckkopf, nur die Arbeitsfläche oder aber sowohl der Druckkopf als auch die Arbeitsfläche bewegt werden.

Der Druckkopf hat einen ersten Betriebszustand, in dem flüssiges Material aus ihm austritt, und einen zweiten Betriebszustand, in dem kein flüssiges Material aus ihm austritt. Der zweite Betriebszustand wird beispielsweise dann eingenommen, wenn eine andere Position auf der Arbeitsfläche angefahren werden und auf dem Weg dorthin kein Material deponiert werden soll. Zwischen den beiden Betriebszuständen des Druckkopfes kann beispielsweise umgeschaltet werden, indem der Vortrieb des festen Ausgangsmaterials ein- bzw. ausgeschaltet wird.

Gegenüber thermoplastischen Kunststoffen haben Metalle einen wesentlich höheren Schmelzpunkt und zugleich im flüssigen Zustand eine wesentlich geringere Viskosität.

Die zum Zeitpunkt dieser Anmeldung noch nicht veröffentlichte Schrift DE102016224047 zeigt einen Druckkopf für einen 3D-Drucker, insbesondere Metalldrucker, umfassend ein Gehäuse, eine Vorrichtung zur Zuführung eines Metalls, einen Kolben, ein Reservoir mit einer Austrittsöffnung und eine Aktorvorrichtung zur Verschiebung des Kolbens.

Sie zeichnet sich dadurch aus, dass das Reservoir einen Schmelzbereich und einen Verdrängerraum für eine flüssige Phase des Metalls aufweist, wobei der Schmelzbereich an einer inerten Atmosphäre angrenzt und mit dem Verdrängerraum derart verbunden ist, dass durch die Verschiebung des Kolbens die flüssige Phase des Metalls zum Durchtritt durch die Austrittsöffnung anregbar ist.

Ferner ist die Austrittsöffnung für den Ausstoß von Tropfen der flüssigen Phase des Metalls ausgebildet, wobei die Austrittsöffnung die Form einer Düse aufweist und fest mit dem Schmelztiegel verbunden sein kann, oder einen wechselbaren Einsatz aufweist, der den Einsatz von unterschiedlichen Düsengeometrien erlaubt.

Auf die Befestigung des Einsatzes, bzw. die Verbindung am Druckkopf wird nicht näher eingegangen.

US 5 598 200 A offenbart einen Druckkopf für einen 3D-Drucker, insbesondere Metalldrucker zur Ausbringung geschmolzenes Metalls.

Auch die CN 205 020 809 U offenbart einen Druckkopf für einen 3D-Drucker zur Ausbringung geschmolzenes Metalls.

Die Offenlegungsschrift DE 10 2014 110799 A1 offenbart einen Druckkopf, eine Vorrichtung zum schichtweisen formfreien Drucken eines dreidimensionalen Objekts mit mindestens einem Druckmaterial sowie ein Verfahren zum schichtweisen formfreien Drucken eines dreidimensionalen Objekts mit mindestens einem Druckmaterial.

CN 106 064 477 B offenbart einen Druckkopf zur Ausbringung geschmolzenes Metalls, aufweisend eine Bajonette-Spannvorrichtung zur Befestigung eines Düsenkörpers.

Der Erfindung liegt die Aufgabe zugrunde, einen Druckkopf für einen 3D-Drucker mit einer Düsenvorrichtung bereitzustellen, die prozesssicher und auswechselbar ist, wobei die Verbindung der Düsenvorrichtung am Druckkopf auch Temperaturen von >1000°C standhalten soll.

### Offenbarung der Erfindung

Die Aufgabe wird durch den erfindungsgemäßen Druckkopf mit den Merkmalen gemäß Anspruch 1 erfüllt.

Der erfindungsgemäße Druckkopft für einen 3D-Metalldrucker, umfassend ein Gehäuse (3), eine Vorrichtung (28) zur Zuführung eines Metalls (14), ein Reservoir (7, 27), eine Düsenvorrichtung (2) und einen Kolben (5), dadurch gekennzeichnet, dass die Düsenvorrichtung (2) eine Führungshülse (11), eine Düsenplatte (9) mit einer Austrittsöffnung (10) und eine Spannvorrichtung (4) aufweist, wobei die Spannvorrichtung (4) aus einer Düsenspannmutter (50) und einem separaten Federelement (40) gebildet ist, und die Düsenspannmutter (50) aus einem Befestigungsmittel (52) zur Befestigung der Düsenspannmutter (50) an der Führungshülse (11) und zumindest einem elastischen Segment (51) gebildet ist, wobei die Düsenplatte (9) und die Führungshülse (11) über das Befestigungsmittel (52) und das zumindest eine elastische Segment (51) der Düsenspannmutter (50) miteinander elastisch verspannt sind und die Führungshülse (11) und das Reservoir (7, 27) über das Befestigungsmittel (52) der Düsenspannmutter (50) und das Federelement (40) miteinander elastisch verspannt sind.

Die Düsenvorrichtung weist in vorteilhafter Weise mehrere Bauteile wie die Führungshülse, die Düsenplatte und die Spannvorrichtung auf, wodurch die unterschiedlichen Funktionen der Düsenvorrichtung bauteilig getrennt sind und die Herstellung der Düsenvorrichtung, bzw. der einzelnen Bauteile der Düsenvorrichtung günstig gehalten werden kann. Ferner können die einzelnen Bauteile je nach Anwendungsfall des 3D-Druckers getauscht werden. Beispielsweise ist es von Vorteil die Führungshülse auszutauschen, wenn eine geänderte Kolbengeometrie des Kolbens zum Einsatz kommt. In vorteilhafter Weise lässt sich bei Bedarf von unterschiedlichen Düsengeometrien, bzw. unterschiedlicher Geometrien der Austrittsöffnung, die Düsenplatte in einfacher Weise austauschen. Je nach benötigter elastischer Vorspannung der Bauteile zueinander ist es von Vorteil die Spannvorrichtung anzupassen oder entsprechend auszutauschen.

Die Führungshülse nimmt die Düsenplatte auf, wobei diese erfindungsgemäß über die Spannvorrichtung elastisch miteinander verspannt sind und die Führungshülse ist zudem in dem Reservoir angeordnet und wird über die Spannvorrichtung elastisch mit dem Reservoir verspannt.

Dadurch kann erreicht werden, dass in vorteilhafter Weise Toleranzen der Bauteile ausgeglichen werden. Zusätzlich können Ausgleichsscheiben zwischen den Bauteilen angeordnet sein. Die elastische Verspannung der Bauteile über die Spannvorrichtung gleicht in vorteilhafter Weise unterschiedliche Ausdehnungen der Bauteile untereinander aus, wodurch zum einen die Bauteile prozesssicher miteinander verbunden sind und zum anderen eine optimierte Dichtwirkung an den Auflageflächen aufweist. Dies ist erforderlich, da flüssiges Metall in der Regel eine sehr kleine Viskosität besitzt und keine Spalte an den Dichtstellen entstehen dürfen, durch die das Metall fließen kann, bzw. gedrückt wird.

Erfindungsgemäß ist die Spannvorrichtung aus einer Düsenspannmutter und einem separaten Federelement zur elastischen Verspannung der Führungshülse mit dem Reservoir gebildet.

Durch das separate elastische Federelement ist es in vorteilhafter Weise möglich die Bauteile bzgl. der Toleranzen und der notwendigen axialen Vorspannung aufeinander abzustimmen.

Zudem ist in einer weiteren Ausführung die Düsenspannmutter aus einem Befestigungsmittel zur Befestigung der Düsenspannmutter an der Führungshülse und zumindest einem elastischen Segment zur axialen elastischen Verspannung der Führungshülse mit der Düsenplatte gebildet.

Durch das Befestigungsmittel kann die Düsenmutter in vorteilhafter Weise an der Führungshülse aufgenommen werden und die axiale elastische Vorspannung kann durch das zumindest eine elastische Segment der Düsenspannmutter in vorteilhafter Weise erreicht werden.

Ferner sind die Führungshülse und das Reservoir über das Befestigungsmittel der Düsenspannmutter und das separate Federelement miteinander axial elastisch verspannt.

In einer Weiterbildung weist das Federelement einen Federtopf zur Anlage am Reservoir und eine Federplatte zur Anlage an der Düsenspannmutter auf, wobei die Federplatte in einem inneren Absatz des Federtopfes angeordnet ist und der Federtopf mit seiner der Federplatte gegenüber angeordneten Seite am Reservoir angeordnet ist.

Das separat zur Düsenspannmutter ausgeführte Federelement fixiert die Führungshülse in vorteilhafter Weise axial zum Reservoir, bzw. zum Schmelztiegel und dichtet die Führungshülse zusätzlich zum Reservoir hin ab. Das Federelement ist aus einem Federtopf und einer Federplatte gebildet, wobei die Federplatte in einem inneren Absatz des Federtopfes angeordnet ist. Die axiale Verspannung der Führungshülse mit dem Reservoir über das Federelement und der Düsenspannmutter stellt in vorteilhafter Weise sicher, dass die Führungshülse nicht bei einem Rückhub des Kolbens mitgezogen wird. Zusätzlich wird durch das Federelement auch eine unterschiedliche axiale Temperatur-Ausdehnung zwischen dem Schmelztiegel und der Führungshülse kompensiert. Zudem wird auch ein Toleranzausgleich der Bauteile durch die Elastizität des Federelements ermöglicht.

Erfindungsgemäß sind die Düsenplatte und die Führungshülse über das Befestigungsmittel und das zumindest eine elastische Segment der Düsenspannmutter miteinander elastisch verspannt sind.

Das zumindest eine elastische Segment der Düsenspannmutter ist beispielsweise als radialer Biegebalken ausgeführt. Das zumindest eine elastische Segment sorgt für die axiale elastische Verspannung der Düsenplatte zur Führungshülse, wobei in vorteilhafter Weise die Toleranzen zwischen der Düsenplatte und der Führungshülse einerseits und der Düsenspannmutter andererseits ausgeglichen werden. Zusätzlich kann es vorteilhaft sein, eine axiale Ausgleichscheibe, beispielsweise zwischen der Düsenplatte und der Führungshülse einzulegen. Durch die axiale elastische Vorspannung, die durch das elastische Segment erzeugt wird, findet zudem in vorteilhafter Weise eine axiale Abdichtung der Düsenplatte zur Führungshülse statt.

In einer bevorzugten Ausführung bildet das Befestigungsmittel der Düsenspannmutter eine Bajonette-Verbindung mit der Führungshülse, wobei das Befestigungsmittel der Düsenspannmutter aus zumindest einem zur Mittelachse der Düsenspannmutter ragenden Vorsprung gebildet ist und die Führungshülse eine vorzugsweise außenumfangsseitig angeordnete Nut zur Aufnahme des Vorsprungs der Düsenspannmutter und zumindest eine Ausnehmung zur Durchführung des zumindest einen Vorsprungs der Düsenspannmutter aufweist. Das Befestigungsmittel klemmt sowohl das separate Federelement als auch das zumindest eine elastische Segment zwischen der Düsenspannmutter und der Führungshülse. Da ein Gewinde auf der keramischen Führungshülse nicht optimal ist, ist der Bajonette-Verschluss vorzuziehen, da dieser in vorteilhafter Weise als ein keramisches Bauteil gut herzustellen ist.

In einer Weiterbildung ist die Führungshülse zur Aufnahme des Kolbens ausgebildet, wobei dieser in der Führungshülse in axialer Richtung geführt ist und einen Verdrängerraum für eine flüssige Phase des Metalls zwischen einer Druckseite des Kolbens, einer Innenfläche der Führungshülse und der Düsenplatte ausbildet.

In einer bevorzugten Weiterbildung sind die den Verdrängerraum ausbildenden Bauteile aus einem keramischen Werkstoff gebildet und die Spannvorrichtung ist aus einem metallischen Werkstoff gebildet. Die den Verdrängerraum ausbildenden Bauteile sind der Kolben, insbesondere die Druckseite des Kolbens, die durch den Stempel des Kolbens gebildet ist, Die Innenseite der Führungshülse und die Düsenplatte.

Die Spannvorrichtung sollte aufgrund des bis zu einer Temperatur von ca. 1000°C Temperaturbeständig sein. Da es schwierig ist an den Verbindungstellen der Bauteile identischen Ausdehnungskoeffizienten der Bauteile zu erhalten, muss eine Kompensation vorgehalten werden. Diese Kompensation wird in vorteilhafter Weise durch die axiale elastische Vorspannung erreicht, die durch das metallische Material der Spannvorrichtung möglich ist. Keramiken weisen sehr begrenzte Elastizitäten auf und weisen vielfach deutliche Unterschiede bzgl. ihrer Ausdehnungskoeffizienten auf. Vorteilhaft sind daher Metalle, welche ausreichend Spannungen auch bei höherer Temperatur um bis zu ca. 1000° ertragen können.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Fig. 1: Eine Schnittzeichnung eines erfindungsgemäßen Druckkopfes,
- Fig. 2: eine detaillierte Darstellung eines Ausführungsbeispiels einer Düsenvorrichtung des Druckkopfes,
- Fig. 3: eine Detailzeichnung eines Federtopfes eines Federelements der Düsenvorrichtung,
- Fig. 4: eine Detailzeichnung einer Federplatte des Federelements der Düsenvorrichtung,
- Fig. 5: eine Detailzeichnung einer Düsenspannmutter der Düsenvorrichtung und
- Fig. 6: eine Detailzeichnung einer Führungshülse der Düsenvorrichtung.

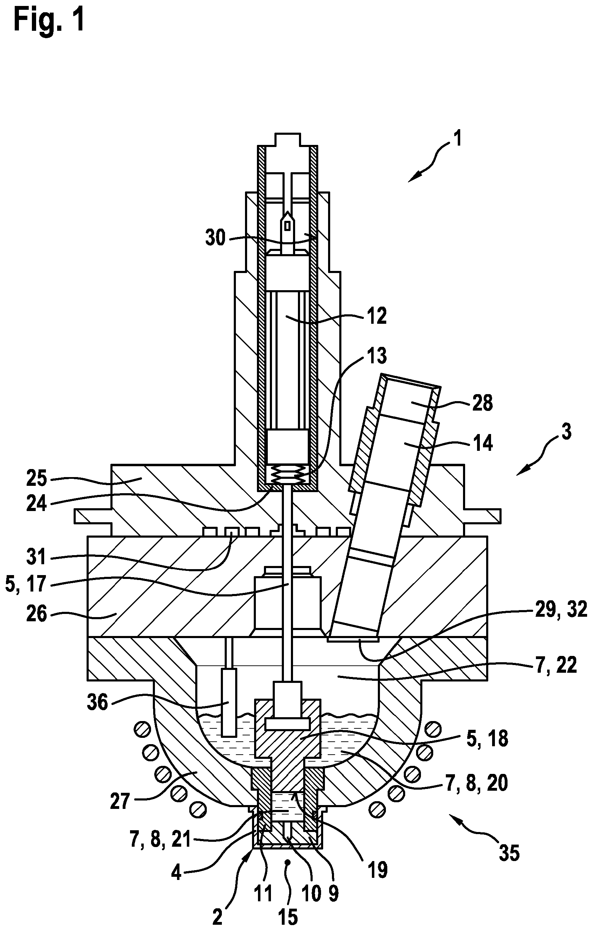

Fig. 1 zeigt ein Ausführungsbeispiel des erfindungsgemäßen Druckkopfes 1 für einen 3D-Drucker.

Der Druckkopf 1 umfasst ein Gehäuse 3, eine Vorrichtung 28 zur Zuführung eines Metalls 14 in fester Phase, ein Reservoir 7, 27, eine Düsenvorrichtung 2 mit einer Austrittsöffnung 10 und einen Kolben 5. Ferner umfasst der Druckkopf eine Aktorvorrichtung 12 zur Verschiebung des Kolbens 5. Das Reservoir 7, 27 weist einen Schmelzbereich 20 und einen Verdrängerraum 21 für eine flüssige Phase 8 des Metalls 14 auf, wobei der Schmelzbereich 20 an einer inerten Atmosphäre 22 angrenzt und mit dem Verdrängerraum 21 derart verbunden ist, dass durch die Verschiebung des Kolbens 5 die flüssige Phase 8 des Metalls 14 zum Durchtritt durch die Austrittsöffnung 10 anregbar ist. Die flüssige Phase 8 des Metalls 14, bzw. das flüssige Metall 8 wird auch als Schmelze 8 bezeichnet und die inerte Atmosphäre 22 ist durch Einleitung eines Inertgases 22 in das Reservoir 7, 27 gebildet. Die Einleitung des Inertgases 22 findet bevorzugt über einen kalten Bereich des Druckkopfes 1 in das Reservoir 7, 27 statt.

Das Reservoir 7, 27 ist als Schmelztiegel 27 ausgebildet, wobei außerhalb des Schmelztiegels 27 ein Induktor 35 und innerhalb des Schmelztiegels ein Sensor 36, insbesondere ein Temperatursensor angeordnet sind. Zwischen dem Schmelztiegel 27 und dem Induktor 35, bzw. der Induktor Spule 35 kann sich optional noch ein nicht dargestellter Isolator befinden.

Die Grenze des Inertgases 22 zum flüssigen Metall 8 entspricht dem Füllstand des flüssigen Metalls 8 in dem Reservoir 7, 27.

Ferner ist das Gehäuse 3 mehrteilig ausgebildet, wobei es zumindest einen Kühlflansch 25, eine Isolierplatte 26 und das Reservoir 7, 27 umfasst. Temperaturempfindliche Bauteile der Messvorrichtung können somit vorteilhaft abgeschirmt werden.

Der Kolben 5 ist mehrteilig ausgebildet, wobei er zumindest eine Kolbenstange 17 aus einem metallischen Werkstoff und einen Stempel 18 aus Keramik umfasst. Die Kolbenstange 17 ragt ausgehend von der Aktorvorrichtung 12 durch den Kühlflansch 25 und der Isolierplatte 26 bis in das Reservoir 7, 27 hinein, wo sie in den Stempel 18 übergeht.

Der Kühlflansch 25 weist eine Ausnehmung 30 zur Aufnahme der Aktorvorrichtung 12, die als piezoelektrischer Aktor 12 ausgebildet ist, auf. Der piezoelektrische Aktor 12 ist während des Betriebs in der Ausnehmung 30 derart fixiert, dass er bei Anliegen einer Spannung einen Arbeitshub auf den Kolben 5, speziell auf die Kolbenstange 17 des Kolbens 5, ausübt. Die Kolbenstange 17 überträgt den Arbeitshub auf den Stempel 18, so dass dieser die flüssige Phase 8 des Metalls 14 zum Durchtritt durch die Austrittsöffnung 10 anregt. Der Kolben 5 ist ohne Aktuierung des Aktors 12 durch eine Feder 13 in eine Ausgangsstellung rückstellbar, wobei die Feder 13 in der Ausnehmung 30 des Kühlflanschs 25 zwischen einem Absatz 24 und dem Aktor 12 angeordnet ist. Die Feder 13 ist als Tellerfeder ausgebildet.

Ferner weist der Kühlflansch 25 Kühlkanäle 31 zur Kühlung auf. Die Kühlkanäle 31 sind zwischen dem Kühlflansch 25 und der Isolierplatte 26 angeordnet und werden mit einem Kühlmedium durchspült. Dies dient als Kühlung gegenüber der Erwärmung durch die Schmelze 8 und zum Kühlen des Aktors 12 im Betrieb. Der Kühlflansch 25 ist aus einem metallischen Werkstoff gebildet.

Die an dem Kühlflansch 25 auf Seiten der Kühlkanäle 31 anliegende Isolierplatte 26 ist aus einem wärmeisolierenden Material gebildet und derart ausgebildet, dass sie einen Wärmeübergang vom Reservoir 7, 27 zum Kühlflansch 25 vermindert.

Die Vorrichtung 28 zur Zuführung des Metalls 14, bzw. die Nachfülleinheit 28 mündet in das Reservoir 7, 27 und ist in dem Kühlflansch 25 und der Isolierplatte 26 angeordnet. Die Nachfülleinheit 28 ragt durch den Kühlflansch 25 und der Isolierplatte 26 hindurch und das Metall 14, bzw. das zu druckende Material 14 ist von außen durch die Vorrichtung 28 zuführbar. Bevorzugt können vordosierte Materialstücke, bzw. Pellets verwendet werden. Am Übergang der Isolierplatte 26 zum Reservoir 7, 27 befindet sich eine Öffnung 29 durch die das Material 14 in das Reservoir 7, 27 gelangt. Die Öffnung 29 ist durch eine Vorrichtung 32 verschließbar, so dass diese bevorzugt nur bei Zuführung des Materials 14 geöffnet ist, wodurch das Entweichen von Energie, bzw. Gas aus der inerten Atmosphäre 22 verringert wird.

Das Metall 14 gelangt in einer festen Phase 14 in den Schmelzbereich 20 des Schmelztiegels und wird durch den Induktor 35 erhitzt, bis es in eine flüssige Phase 8 übergeht. Bei Erreichen einer gewünschten Prozesstemperatur der Schmelze 8, die durch den Temperatursensor 36 ermittelt wird, und des kann der Druckkopf 1 den Betrieb aufnehmen. Die flüssige Phase 8, bzw. die Schmelze 8 gelangt durch Schweredruck der Schmelze 8 oder durch eine Kombination aus Schweredruck und Atmosphärendruck des Inertgases 22 am Stempel 18 vorbei in den Verdrängerraum 21. Der Stempel 18 des Kolbens 5 ist mit einer Druckseite 19 in der Schmelze 8, bzw. von Schmelze 8 umgeben und an der Verbindungsseite zur Kolbenstange 17 in der inerten Atmosphäre 22, bzw. von der inerten Atmosphäre 22 umgeben. Die Kolbenstange 17 kommt prozessbedingt nicht mit der Schmelze 8 in Berührung.

Die Keramik des Stempels 18 ist vorteilhafterweise sehr gut temperaturleitend, um die durch den Induktor 35 erzeugte Wärme gut in den Verdrängerraum 21 übertragen zu können.

Bei Aktuierung des piezoelektrischen Aktors 12 übt die Druckseite 19 des Stempels 18 einen Druck auf die Schmelze 8 im Verdrängerraum 21 in Richtung der Austrittsöffnung 10 aus und sorgt für einen Ausstoß eines Tropfens 15 durch die Düsenvorrichtung 2, bzw. der Austrittsöffnung 10 der Düsenvorrichtung 2. Die Düsenvorrichtung 2 ist für den Ausstoß von Tropfen 15 der flüssigen Phase 8 des Metalls 14 ausgebildet, wobei die Düsenvorrichtung 2 eine Führungshülse 11, eine Düsenplatte 9 mit der Austrittsöffnung 10 und eine Spannvorrichtung 4 aufweist, wobei die Düsenplatte 9 und die Führungshülse 11 über die Spannvorrichtung 4 miteinander elastisch verspannt sind und die Führungshülse 11 und das Reservoir 7, 27 über die Spannvorrichtung 4 miteinander elastisch verspannt sind. Die Düsenvorrichtung 2, insbesondere die Düsenplatte 9 ist austauschbar, wodurch der Einsatz von unterschiedlichen Düsengeometrien möglich ist.

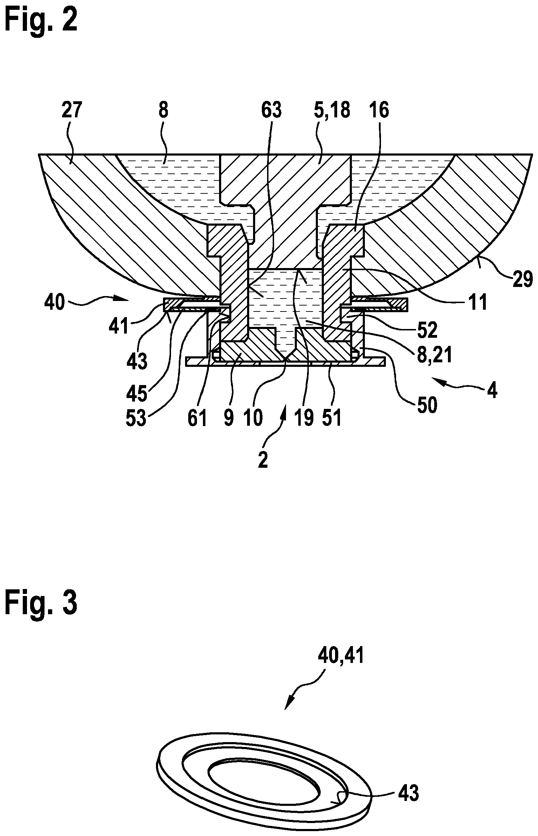

Fig. 2 zeigt eine detaillierte Darstellung der Düsenvorrichtung 2 des Druckkopfes 1. Dargestellt ist die Düsenvorrichtung 2 aufweisend die Führungshülse 11, die Düsenplatte 9 mit der Austrittsöffnung 10 und der Spannvorrichtung 4. Die Spannvorrichtung 4 ist aus einer Düsenspannmutter 50 und einem separaten Federelement 40 gebildet, wobei die Spannvorrichtung 4, insbesondere das separate Federelement 40 und die Düsenspannmutter 50 aus einem metallischen Werkstoff gebildet ist.

Die Führungshülse 11 ist zur Aufnahme des Kolbens 5 ausgebildet, wobei dieser, im Speziellen der Stempel 18 des Kolbens 5, in der Führungshülse 11 in axialer Richtung geführt ist und den Verdrängerraum 21 für die flüssige Phase 8 des Metalls 14 zwischen einer Druckseite 19 des Kolbens 5, einer Innenfläche 63 der Führungshülse 11 und der Düsenplatte 9 ausbildet.

Die den Verdrängerraum 21 ausbildenden Bauteile, insbesondere der Kolben 5, bzw. der Stempel 18 des Kolbens 5, die Führungshülse 11 und die Düsenplatte 9 sind aus einem keramischen Werkstoff gebildet.

Die Führungshülse 11 und das Reservoir 7, 27 sind über ein Befestigungsmittel 52 der Düsenspannmutter 50 und das Federelement 40 miteinander elastisch verspannt.

Die Führungshülse 11 nimmt den Kolben 5, bzw. den Stempel 18 des Kolbens 5 auf und führt diesen in axialer Richtung des Druckkopfes 1. Ferner stützt sich die Führungshülse 11 über einen Absatz 16 innerhalb des Reservoirs 27, bzw. des Schmelztiegels ab. Die Führungshülse 11 besteht aus einem hitzebeständigen keramischen Material, da sie an ihrer Innenfläche 63 in Kontakt mit der flüssigen Phase 8 des Metalls 14 steht. Eine außenumfangsseitig angeordnete Nut 61 der Führungshülse 11 bildet mit dem Befestigungsmittel 52 der Düsenspannmutter 50 einen Bajonette-Verschluss der Spannvorrichtung 4 und die Führungshülse 11 wird durch die Spannvorrichtung 4 an einer Außenseite 29 des Reservoirs 27 elastisch verspannt.

Die Düsenspannmutter 50 ist aus dem Befestigungsmittel 52 zur Befestigung der Düsenspannmutter 50 an der Führungshülse 11 und zumindest einem elastischen Segment 51 gebildet. Ferner ist die Düsenspannmutter 50 aus einem hochtemperaturbeständigen Material, insbesondere aus einem metallischen Material gebildet.

Die Düsenplatte 9 und die Führungshülse 11 sind über das Befestigungsmittel 52 und das zumindest eine elastische Segment 51 der Düsenspannmutter 50 miteinander elastisch verspannt.

Das Befestigungsmittel 52 bildet mit der Nut 61 der Führungshülse 11 den Bajonette-Verschluss der Düsenvorrichtung 2. Durch das Verschließen des Bajonette-Verschlusses der Düsenvorrichtung 2 verspannen sich sowohl das separate Federelement 40 zwischen dem Reservoir 27 und einer Anlagefläche 53 der Düsenspannmutter 50 als auch das zumindest eine elastische Segment 51 der Düsenspannmutter 50 an der Düsenplatte 9. Da ein Gewinde auf der keramischen Führungshülse nicht optimal ist, ist der Bajonette-Verschluss vorzuziehen, da dieser als ein keramisches Bauteil gut herzustellen ist.

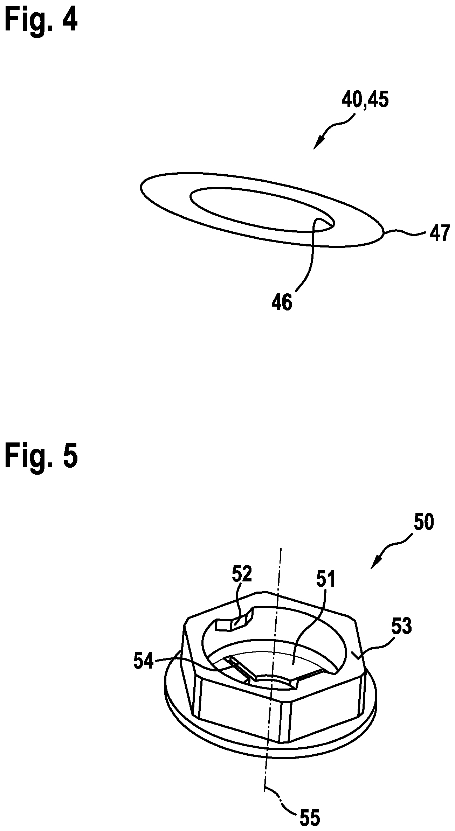

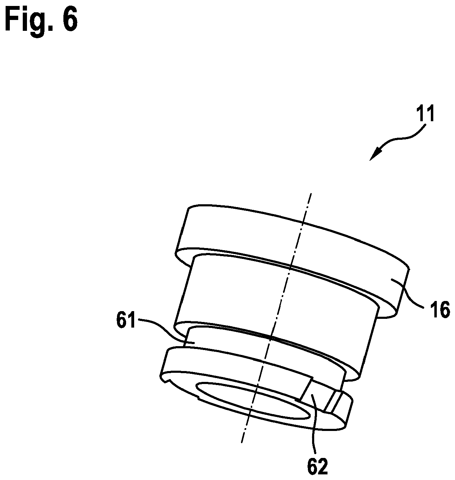

Das Befestigungsmittel 52 der Düsenspannmutter 50 ist aus zumindest einem zur in Fig. 5 dargestellten Mittelachse 55 der Düsenspannmutter 50 ragenden Vorsprung 52 gebildet und die Führungshülse 11 weist die außenumfangsseitig angeordnete Nut 61 zur Aufnahme des Vorsprungs 52 der Düsenspannmutter 50 und zumindest eine in Fig. 6 dargestellte Ausnehmung 62 zur Durchführung des zumindest einen Vorsprungs 52 der Düsenspannmutter 50 auf. Die Düsenspannmutter 50 wird zur Befestigung der Düsenvorrichtung 2 auf die Führungshülse 11 geschoben, wobei der Vorsprung 52 der Düsenspannmutter 50 durch die Ausnehmung 62 der Führungshülse 11 geführt wird und anschließend in der Nut 61 der Führungshülse 11 aufgenommen wird. Durch eine Drehung der Düsenspannmutter 50 greift der Vorsprung 52 in der Nut 62 ein und wodurch die Düsenspannmutter 50 in Richtung des Reservoirs 27 bewegt wird. Durch dieses Bewegung wird zum Einen die Düsenplatte 9 zwischen der Düsenspannmutter 50 und der Führungshülse 11 durch das elastische Segment 51 gegen die Führungshülse 11 axial elastisch vorgespannt und zum Anderen drückt die Anlagefläche 53 der Düsenspannmutter 50 in Richtung des Reservoirs 27 gegen das Federelement 40 wodurch dieses gegen das Reservoir 27 gedrückt wird und dadurch die Führungshülse 11 und das Reservoir 27 miteinander axial elastisch verspannt sind. Die Führungshülse 11 greift mit seinem Absatz 16 in das Reservoir 27 ein und wird durch das Anziehen der Düsenspannmutter 50 in entgegengesetzter Richtung der Bewegung der Düsenspannmutter 50 gegen das Reservoir 27 gezogen.

Das separat zur Düsenspannmutter 50 ausgeführte Federelement 40 fixiert die Führungshülse 11 axial zum Reservoir 27, bzw. zum Schmelztiegel und dichtet die Führungshülse 11 zusätzlich zum Reservoir hin 27 ab. Das Federelement 40 ist aus einem Federtopf 41 und einer Federplatte 45 gebildet, wobei die Federplatte 45 in einem in Fig. 3 dargestellten inneren Absatz 43 des Federtopfes 41 angeordnet ist. Der Federtopf 41 dient zur Anlage am Reservoir 27 und die Federplatte 45 zur Anlage an der Düsenspannmutter 50. Die Anlagefläche 53 der Düsenspannmutter 50 liegt an einem in der Fig. 4 dargestellten inneren Bereich 46 der Federplatte 45 an und drückt bei verschlossenem Bajonette-Verschluss in axiale Richtung des Reservoirs 27. Dadurch wird ein in Fig. 4 dargestellter äußerer Bereich 47 des Federtellers 45 in den inneren Absatz 43 des Federtopfes 41 gedrückt und der Federteller 45 verformt sich elastisch, bzw. verspannt sich und drückt den Federtopf 41 an die Außenseite 29 des Reservoirs 27.

Die axiale Verspannung der Führungshülse 11 mit dem Reservoir 27 über das Federelement 40 und der Düsenspannmutter 50 stellt sicher, dass die Führungshülse 11 nicht bei einem Rückhub des Kolbens 5 mitgezogen wird. Zusätzlich kann durch das Federelement 40 auch eine unterschiedliche axiale Temperatur-Ausdehnung zwischen dem Reservoir 27, bzw. Schmelztiegel und der Führungshülse 11 kompensiert werden. Zudem wird auch ein Toleranzausgleich der Bauteile durch die Elastizität des Federelements 40 ermöglicht. Bei größeren Toleranzen kann zusätzlich mit nicht dargestellten axialen Ausgleichsscheiben gearbeitet werden.

Das zumindest eine elastische Segment 51 der Düsenspannmutter 50 ist in dieser Ausführung aus vier elastischen Segmenten 51 gebildet, wobei diese durch in Fig. 6 dargestellte Schlitze 54 voneinander getrennt sind und sich zur Mitte, bzw. Mittelachse 55 der Düsenspannmutter 50 axial verbiegen können. Sie sind als radialen Biegebalken ausgeführt. Die elastischen Segmente 51 sorgen für die axiale elastische Verspannung der Düsenplatte 9 zur Führungshülse 11. Auch hier gilt es die Toleranzen zwischen den Keramiken der Düsenplatte 9 und der Führungshülse 11 einerseits und der metallischen Düsenspannmutter 50 andererseits auszugleichen. Zusätzlich kann eine nicht dargestellte axiale Ausgleichsscheibe, beispielsweise zwischen der Düsenplatte 9 und den elastischen Segmenten 51 der Düsenspannmutter 50 eingelegt werden. Durch diese Anordnung wird verhindert, dass die Ausgleichsscheibe mit Schmelze 8 in Berührung kommt.

## Patentansprüche

1. Druckkopf (1) für einen 3D-Metalldrucker, umfassend ein Gehäuse (3), eine Vorrichtung (28) zur Zuführung eines Metalls (14), ein Reservoir (7, 27), eine Düsenvorrichtung (2) und einen Kolben (5),
**dadurch gekennzeichnet, dass**
die Düsenvorrichtung (2) eine Führungshülse (11), eine Düsenplatte (9) mit einer Austrittsöffnung (10) und eine Spannvorrichtung (4) aufweist, wobei
die Spannvorrichtung (4) aus einer Düsenspannmutter (50) und einem separaten Federelement (40) gebildet ist, und die Düsenspannmutter (50) aus einem Befestigungsmittel (52) zur Befestigung der Düsenspannmutter (50) an der Führungshülse (11) und zumindest einem elastischen Segment (51) gebildet ist, wobei die Düsenplatte (9) und die Führungshülse (11) über das Befestigungsmittel (52) und das zumindest eine elastische Segment (51) der Düsenspannmutter (50) miteinander elastisch verspannt sind und
die Führungshülse (11) und das Reservoir (7, 27) über das Befestigungsmittel (52) der Düsenspannmutter (50) und das Federelement (40) miteinander elastisch verspannt sind.

2. Druckkopf (1) nach Anspruch 1,
wobei das Federelement (40) einen Federtopf (41) zur Anlage am Reservoir (7, 27) und eine Federplatte (45) zur Anlage an der Düsenspannmutter (50) aufweist.

3. Druckkopf (1) nach Anspruch 2,
wobei die Federplatte (45) in einem inneren Absatz (43) des Federtopfes (41) angeordnet ist und der Federtopf (41) mit seiner der Federplatte (45) gegenüber angeordneten Seite am Reservoir (7, 27) angeordnet ist.

4. Druckkopf (1) nach einem der vorhergehenden Ansprüche,
wobei das Befestigungsmittel (52) der Düsenspannmutter (50) eine Bajonette-Verbindung mit der Führungshülse (11) bildet, wobei das Befestigungsmittel (52) der Düsenspannmutter (50) aus zumindest einem zur Mittelachse (55) der Düsenspannmutter (50) ragenden Vorsprung (52) gebildet ist und die Führungshülse (11) eine außenumfangsseitig angeordnete Nut (61) zur Aufnahme des Vorsprungs (52) der Düsenspannmutter (50) und zumindest eine Ausnehmung (62) zur Durchführung des zumindest einen Vorsprungs (52) der Düsenspannmutter (50) aufweist.

5. Druckkopf (1) nach einem der vorhergehenden Ansprüche,
wobei die Führungshülse (11) zur Aufnahme des Kolbens (5) ausgebildet ist, wobei dieser in der Führungshülse (11) in axialer Richtung geführt ist und einen Verdrängerraum (21) für eine flüssige Phase (8) des Metalls (14) zwischen einer Druckseite (19) des Kolbens (5), einer Innenfläche (63) der Führungshülse (11) und der Düsenplatte (9) ausbildet.

6. Druckkopf (1) Anspruch 5,
wobei die den Verdrängerraum (21) ausbildenden Bauteile (5, 11, 9) aus einem keramischen Werkstoff gebildet sind.

7. Druckkopf (1) einem der vorhergehenden Ansprüche,
wobei die Spannvorrichtung (4, 40, 50) aus einem metallischen Werkstoff gebildet ist.

## Claims

1. Printhead (1) for a 3D metal printer, comprising a housing (3), a device (28) for supplying a metal (14), a reservoir (7, 27), a nozzle device (2) and a piston (5),
**characterized in that**
the nozzle device (2) has a guide sleeve (11), a nozzle plate (9) having an outlet opening (10), and a clamping device (4), wherein the clamping device (4) is formed from a nozzle clamping nut (50) and a separate spring element (40), and the nozzle clamping nut (50) is formed from a fastening means (52) for fastening the nozzle clamping nut (50) on the guide sleeve (11) and from at least one elastic segment (51) , wherein the nozzle plate (9) and the guide sleeve (11) are clamped together elastically by means of the fastening means (52) and the at least one elastic segment (51) of the nozzle clamping nut (50), and the guide sleeve (11) and the reservoir (7, 27) are clamped together elastically by means of the fastening means (52) of the nozzle clamping nut (50) and the spring element (40).

2. Printhead (1) according to Claim 1,
wherein
the spring element (40) has a spring pot (41) for bearing against the reservoir (7, 27) and a spring plate (45) for bearing against the nozzle clamping nut (50).

3. Printhead (1) according to Claim 2,
wherein
the spring plate (45) is arranged in an inner offset (43) of the spring pot (41), and the spring pot (41) is arranged with its side arranged opposite the spring plate (45) against the reservoir (7, 27).

4. Printhead (1) according to any of the preceding claims,
wherein
the fastening means (52) of the nozzle clamping nut (50) forms a bayonet joint with the guide sleeve (11), wherein the fastening means (52) of the nozzle clamping nut (50) is formed from at least one projection (52) projecting toward the center line (55) of the nozzle clamping nut (50), and the guide sleeve (11) has a groove (61), arranged on the outer circumference, for receiving the projection (52) of the nozzle clamping nut (50), and at least one recess (62) for passing through the at least one projection (52) of the nozzle clamping nut (50) .

5. Printhead (1) according to any of the preceding claims,
wherein
the guide sleeve (11) is designed to receive the piston (5), wherein said piston is guided in the axial direction in the guide sleeve (11) and forms a displacement space (21) for a liquid phase (8) of the metal (14) between a pressure side (19) of the piston (5), an inner surface (63) of the guide sleeve (11), and the nozzle plate (9).

6. Printhead (1) according to Claim 5,
wherein
the components (5, 11, 9) forming the displacement space (21) are formed from a ceramic material.

7. Printhead (1) according to any of the preceding claims,
wherein
the clamping device (4, 40, 50) is formed from a metallic material.

## Revendications

1. Tête d'impression (1) destinée à une imprimante 3D de métal, comprenant un boîtier (3), un dispositif (28) servant à l'amenée d'un métal (14), un réservoir (7, 27), un dispositif à buses (2) et un piston (5), **caractérisée en ce que**
le dispositif à buses (2) présente un manchon de guidage (11), une plaque à buses (9) dotée d'une ouverture de sortie (10) et un dispositif de serrage (4),
le dispositif de serrage (4) étant formé à partir d'un écrou de serrage de buse (50) et d'un élément ressort (40) séparé, et l'écrou de serrage de buse (50) étant formé à partir d'un moyen de fixation (52) servant à la fixation de l'écrou de serrage de buse (50) sur le manchon de guidage (11) et d'au moins un segment élastique (51), la plaque à buses (9) et le manchon de guidage (11) étant serrés élastiquement l'un avec l'autre par le biais du moyen de fixation (52) et de l'au moins un segment élastique (51) de l'écrou de serrage de buse (50) et
le manchon de guidage (11) et le réservoir (7, 27) étant serrés élastiquement l'un avec l'autre par le biais du moyen de fixation (52) de l'écrou de serrage de buse (50) et de l'élément ressort (40).

2. Tête d'impression (1) selon la revendication 1,
l'élément ressort (40) présentant une cuvette de ressort (41) destinée à s'appuyer contre le réservoir (7, 27) et une plaque de ressort (45) destinée à s'appuyer contre l'écrou de serrage de buse (50).

3. Tête d'impression (1) selon la revendication 2,
la plaque de ressort (45) étant disposée dans un épaulement interne (43) de la cuvette de ressort (41) et la cuvette de ressort (41) étant disposée contre le réservoir (7, 27) par son côté disposé à l'opposé de la plaque de ressort (45) .

4. Tête d'impression (1) selon l'une des revendications précédentes,
le moyen de fixation (52) de l'écrou de serrage de buse (50) formant avec le manchon de guidage (11) une liaison à baïonnette, le moyen de fixation (52) de l'écrou de serrage de buse (50) étant formé à partir d'au moins une saillie (52) faisant saillie vers l'axe médian (55) de l'écrou de serrage de buse (50) et le manchon de guidage (11) présentant une rainure (61), disposée du côté périphérique extérieur, servant à la réception de la saillie (52) de l'écrou de serrage de buse (50) et au moins un évidement (62) servant au passage de l'au moins une saillie (52) de l'écrou de serrage de buse (50).

5. Tête d'impression (1) selon l'une des revendications précédentes,
le manchon de guidage (11) étant réalisé pour la réception du piston (5), celui-ci étant guidé dans la direction axiale dans le manchon de guidage (11) et formant un espace de déplacement (21) pour une phase liquide (8) du métal (14) entre un côté de pression (19) du piston (5), une surface interne (63) du manchon de guidage (11) et la plaque à buses (9).

6. Tête d'impression (1) selon la revendication 5,
les composants (5, 11, 9) formant l'espace de déplacement (21) étant formés à partir d'une matière céramique.

7. Tête d'impression (1) selon l'une des revendications précédentes,
le dispositif de serrage (4, 40, 50) étant formé à partir d'une matière métallique.
